# EUROPEAN PATENT APPLICATION

(11) **EP 1 995 124 A1**
(43) Date of publication of application: **26.11.2008**
(21) Application number: 07108554.2
(22) Date of filing: 21.05.2007
(51) Int. Cl.: B60R 21/01

(54) **Sensing system for monitoring a predetermined space**

(71) Applicant: IEE INTERNATIONAL ELECTRONICS & ENGINEERING S.A., 6468 Echternach (LU)
(72) Inventor: Schoos, Aloyse, 8094, Bertrange (LU); Federspiel, Laurent, 5413 Canach (LU)
(74) Representative: Beissel, Jean

(57) **Abstract**

A sensing system (10) for monitoring a predetermined space comprises a control unit, one or more antenna electrodes (14) connected to the control unit and an autonomous modulator (12). At least one of the antenna electrodes (14) is operable as an emitter antenna electrode for emitting RF excitation signals into the space to be monitored and at least one of the antenna electrodes is operable as a receiver antenna electrode for receiving RF response signals. The autonomous modulator (12) is arranged at a certain distance from the antenna electrode (14) operable as emitter antenna electrode in such a way that at least a part of the space to be monitored lies between the first autonomous modulator (12) and the antenna electrode (14) operable as emitter antenna electrode. The autonomous modulator (12) is configured and arranged for emitting an RF response signal if, during operation of the system, it is excited by an RF excitation signal emitted by the antenna electrode (14) that is operated as emitter antenna electrode. The control unit (16) and the first autonomous modulator (12) are furthermore adapted to one another in such a way that the RF response signal emitted by the autonomous modulator (12) is responsive to the presence of a conductive body in the part of the space to be monitored between the first autonomous modulator (12) and the antenna electrode (14) operated as emitter antenna electrode.

## Description

### Technical field

The present invention generally relates to a sensing system for monitoring a predetermined space. A particular aspect of the invention relates to an automotive vehicle equipped with a sensing system for monitoring its passenger compartment or parts thereof.

### Background Art

A conventional approach for monitoring a predetermined space is to use a capacitive sensing system. Such capacitive sensing systems are well known in the literature and have been described in various embodiments, in particular for detecting the occupancy state of a car seat. While some basic systems only indicate presence and absence of an occupant, more sophisticated systems additionally provide an indication of occupant class. Based upon information provided by the sensing system, an occupant protection system connected therewith can take appropriate measures in case of a collision. A capacitive occupant detection system is described, for instance, in European patent application EP 1 457 391 A1. This system comprises a capacitive electrode arranged in the vehicle seat and a capacitive electrode arranged in the footwell in front of the vehicle seat. During operation, the system determines capacitive coupling between the seat electrode and an object placed on the seat and between the foot-area electrode and the seat electrode. In particular, when an adult occupant is seated on the vehicle seat, the signal emitted from the electrode in the footwell is coupled through the occupant's body to the electrode in the seat. If, however, the seat is vacant, occupied by a child or an object has been placed thereon, the coupling between the electrodes is less important than in the former case. The system of EP 1 457 391 A1 has the drawback that integration of the footwell electrode into or below the floor carpet is complex and relatively costly because of the cabling required.

### Technical problem

It is an object of the present invention to provide an improved sensing system. This object is achieved by a sensing system as claimed in claim 1.

### General Description of the Invention

According to the invention, a sensing system for monitoring a predetermined (preferably a confined) space, comprises a control unit, one or more antenna electrodes connected to the control unit and an autonomous modulator, i.e. a modulator which is not electrically wired to another component and which is powered only by electric RF fields to which it is exposed. At least one of the antenna electrodes is operable as an emitter antenna electrode for emitting RF excitation signals into the space to be monitored and at least one of the antenna electrodes is operable as a receiver antenna electrode for receiving RF response signals. The autonomous modulator is arranged at a certain distance from the antenna electrode operable as emitter antenna electrode in such a way that at least a part of the space to be monitored lies between the first autonomous modulator and the antenna electrode operable as emitter antenna electrode. The autonomous modulator is configured and arranged for emitting an RF response signal if, during operation of the system, it is excited by an RF excitation signal emitted by the antenna electrode that is operated as emitter antenna electrode. The control unit and the first autonomous modulator are furthermore adapted to one another in such a way that the RF response signal emitted by the autonomous modulator is responsive to the presence of a conductive body (e.g. a human body or a part of a human body) in the part of the space to be monitored between the first autonomous modulator and the antenna electrode operated as emitter antenna electrode.

It shall be noted that one or more of the antenna electrodes may be operable both as emitter and receiver electrodes. For instance, if the system comprises a unique antenna electrode, this antenna electrode serves as emitter and receiver electrode. The antenna electrodes may be made of any reasonably conductive material, e.g. a metal sheet, a metal coating or metal layer on an insulating substrate (such as e.g. PET, PEN, PI etc.), metallised or metal textile fibres, a conductive organic material, and the like. Depending on the application, the antenna electrodes may be transparent, translucent or opaque. Transparent or translucent antenna electrodes may, for instance, be provided as a layer of transparent or translucent conductive material (e.g. ITO or a conductive polymer) on a transparent or translucent insulating substrate.

According to a preferred embodiment of the invention, the autonomous modulator is configured such that it is only excited with the RF excitation signal if the signal strength of the RF excitation signal at the location of the autonomous modulator exceeds a minimum signal strength level (corresponding to the internal power threshold of the modulator). The autonomous modulator and the control unit are furthermore adapted to one another in such a way that, during operation of the system, the signal strength of the RF excitation signal at the first autonomous modulator only exceeds the minimum signal strength level if a conductive body in the part of the space to be monitored between the first autonomous modulator and the antenna electrode operated as emitter antenna electrode bridges at least a predefined section of the gap between the autonomous modulator and the antenna electrode operable as emitter antenna electrode. Preferably, the internal minimum power level of the modulator and the signal strength of the excitation signal at emission are adapted to each other and to the geometric arrangement of the antenna electrodes and the modulator in such a way that the coupling across the gap between the between the modulator and the emitting antenna electrodes turns out to be (a) insufficient for exciting the modulator if there is no conductive body or if the conductive body bridges only a small section of the gap and (b) sufficient to cause excitation of the modulator if there is a conductive body bridging the gap on a predefined section, i.e. on a predefined length.

Additionally or alternatively, the autonomous modulator may be configured such that a characteristic (e.g. amplitude, frequency and/or phase modulation) of the RF response signal emitted by the autonomous modulator and received by the antenna electrode operated as receiver antenna electrode is indicative of the signal strength of the RF excitation signal at the first autonomous modulator. The response signal received at the receiver antenna electrode thus contains information on the signal strength of the excitation signal at the modulator. This information may be used by the control unit to derive the attenuation to which the excitation signal was subject on its way from the emitter antenna electrode to the modulator. Since the attenuation is higher (i.e. there is less coupling) if there is no or only a small conductive body between the emitter antenna electrode and the modulator than if there is a larger conductive body, the control unit can derive information on the conductive body, such as e.g. on its size, mass, location and/or position.

According to a preferred embodiment of the invention, the sensing system includes a second autonomous modulator for detecting the presence and/or categorizing a conductive body in the part of the space to be monitored between the second autonomous modulator and the antenna electrode operable as emitter antenna electrode. The RF response signal emitted by the second autonomous modulator is distinct from the RF response signal emitted by the first (the above-mentioned) autonomous modulator, so that the control unit, upon receipt of a response signal, may determine which modulator has responded and which part of the space to be monitored the information contained in the response signal concerns. The second autonomous modulator is preferably similar to the first modulator. The second modulator may, in particular, be configured such that it is only excited with the RF excitation signal if the signal strength of the RF excitation signal at the second autonomous modulator exceeds a minimum signal strength level. In this case the second autonomous modulator and the control unit are adapted to one another in such a way that the signal strength of the RF excitation signal at the second autonomous modulator only exceeds the minimum signal strength level if the conductive body is present in the part of the space to be monitored between the second autonomous modulator and the antenna electrode operable as emitter antenna electrode. Additionally or alternatively, the second autonomous modulator may be configured such that a characteristic of the RF response signal emitted by the second autonomous modulator and received by the receiver antenna electrode is indicative of the signal strength of the RF excitation signal at the second autonomous modulator. Of course, the sensing system could comprise more than two autonomous modulators (e.g. n modulators, where n>2) with a unique modulation sequence for each one.

Those skilled will appreciate that numerous variants of the emitter/receiver components, i.e. the control unit and the antenna electrode(s) are possible. According to a first variant, the control unit has connected thereto a unique antenna electrode, operable as emitter and receiver antenna electrode. According to another variant, the control unit has a plurality of antenna electrodes connected thereto. In a particular embodiment of this variant, each one of the antenna electrodes is operable as emitter antenna electrode for emitting RF excitation signals into the space to be monitored. In this case, at least one of the antenna electrodes is additionally operable as receiver antenna electrode. In further embodiments with a plurality of antenna electrodes, there may be antenna electrodes operable only as emitter antenna electrodes, only as receiver antenna electrodes and/or operable as both emitter and receiver antenna electrodes, provided that there is at least one antenna electrode for emitting and one for receiving or at least one antenna electrode for both emitting and receiving. As shall be noted, antenna electrodes operable both for emitting and receiving may be configured for being simultaneously operable in emitting and receiving mode or, alternatively for being switched between emitting and receiving mode. The configuration of the antenna electrodes has, of course, to be compatible with the modulator(s) used in the sensing system. Preferably, the control unit is able to separate the signals from different antenna electrodes and the autonomous modulator(s) and distinguish these signals originating from (a) electrodes of other systems in the neighbourhood and (b) noise and parasitic electric signals from the environment.

If there is more than one antenna electrode operable as receiver antenna electrode, each one of them advantageously emits a characteristic (individual) RF excitation signal, such that RF excitation signals emitted by different ones of the emitter antenna electrodes are distinct from one another. Each RF excitation signal might comprise, for instance, a unique modulation associated with the respective emitting antenna electrode.

Those skilled will appreciate that the sensing system according to the present invention is particularly suited for, though not limited to, implementation in the passenger compartment of an automotive vehicle, for the purpose of determining an occupancy state of one or more vehicle seats in the vehicle compartment.

In an advantageous embodiment, the antenna electrode operable as emitter antenna electrode is integrated in a vehicle seat, and the autonomous modulator is arranged in the footwell in front of the vehicle seat so that the space to be monitored includes the space that an adult occupant of the vehicle seat occupies with his or her legs if he or she is normally seated on the vehicle seat. Thus, if an adult person is seated in normal position on the vehicle seat, he or she acts as the conductive body, which increases the coupling between the emitting antenna electrode in the seat and the modulator in the footwell. With respect to the capacitive occupant detection/classification system disclosed in EP 1 457 391 A1, the present system has the advantage that the component integrated in or below the floor carpet of the footwell does not require wiring or cabling.

In another advantageous embodiment, a plurality of vehicle seats are equipped each with an autonomous modulator, configured and arranged for emitting an RF response signal if it is excited by an RF excitation signal emitted by the antenna electrode operable as emitter antenna electrode. In contrast to the previous embodiment, the modulators are not arranged in the footwells but in the vehicle seats. This is particularly useful if the vehicle seats are removable from the vehicle, since the autonomous modulators do not require disconnection and reconnection of communication or power supply cables when the seats are removed from and installed in the vehicle, respectively. If the modulator is positioned at the ground side end of the capacitive coupling loop, the ground side electrode could be replaced by a wire to the seat frame, a metallic frame that is grounded via the seat fixation. This wire does not affect seat removal as it is inside the seat. In this case, the modulator may also have a wire connection to the seat-belt buckle switch in such a way that the status of this switch is encoded in the characteristic modulation of the modulator, e.g. in a few bits of the modulator's binary sequence. Thus, the central control unit may receive all information to generate seat belt warning signal in case a seat is occupied and the belt not buckled. The control unit could have connected thereto a unique antenna electrode, arranged at a central location of the passenger compartment (e.g. on the compartment ceiling), or alternatively, a plurality of antenna electrodes arranged at different locations of the vehicle compartment. In the latter alternative, for instance, each seat that is equipped with a modulator could have an emitter and/or receiver antenna electrode associated with it, e.g. in the ceiling at a location above the respective seat.

### Brief Description of the Drawings

Further details and advantages of the present invention will be apparent from the following detailed description of several not limiting embodiments with reference to the attached drawings, wherein:
Fig. 1 is a schematic view of a basic sensing system according to the invention;
Fig. 2 is an illustration of the detection of a conductive body with the sensing system of Fig. 1;
Fig. 3 is schematic illustration of an autonomous modulator;
Fig. 4 is schematic view of a sensing system with a plurality of antenna electrodes and autonomous modulators;
Figs. 5 and 6 are schematic illustrations of a vehicle equipped with a sensing system according to a preferred embodiment of the invention;
Figs. 7 and 8 are schematic illustrations of a vehicle equipped with a sensing system according to another preferred embodiment of the invention.

### Description of Preferred Embodiments

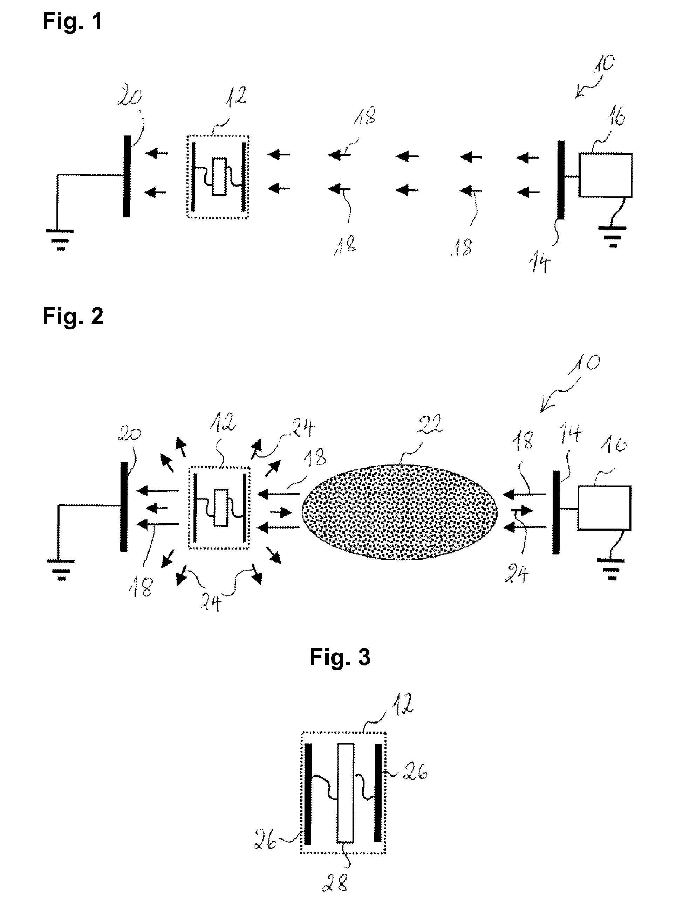

Fig. 1 shows a schematic of a basic sensing system 10 for monitoring a region of space between an autonomous modulator 12 and the antenna electrode 14, which is connected to the electronic control unit 16. When operating, the control unit 16 (which may comprise an application-specific integrated circuit and/or a microprocessor with an RF front end) supplies an oscillating voltage to the antenna electrode 14, whereupon this emits an RF signal into its surroundings, in particular, into the space to be monitored, resulting in an oscillating electric field (represented as arrows 18) between the antenna electrode 14 and a ground surface (represented as ground electrode 20). The frequency of the oscillating voltage and the RF signal emitted is chosen such that the dimensions of the sensing system (in particular the space to be monitored) are small compared to the wavelength of the RF signal. Preferably, the wavelength of the RF signal is at least 10 times the maximum gap length between the antenna electrode and the modulator. With 1 m maximum gap length, the wavelength should thus not be lower than 10 m, which corresponds to a frequency of 30 MHz.

In the absence of a conductive body (Fig. 1) between the antenna electrode and ground electrode 20, the coupling between these electrodes is relatively weak due to the low capacitance of the capacitor formed by these electrodes 14, 20. If however, a conductive body 22 occupies a portion of the space between the antenna electrode 14 and the ground electrode 20 (Fig. 2), the capacitance of this capacitor increases, which results in higher signal strength (higher field strength) at the modulator 12, illustrated by the increased lengths of arrows 18. The conductive body 22 bridges the insulating gap between the antenna electrode 14 and the ground electrode 20 on a certain length, thus shortens the path of the electric field in air and so increases the electrical current flowing into and out of the antenna electrode 14. Measuring the intensity of the electrical current flowing in and out of the antenna electrode 14 thus enables the electronic control 16 unit of the sensing system 10 to detect, to size and/or to locate a conductive body in the surroundings of the antenna electrode 14. In addition, when the conductive body 22 is present, the autonomous modulator 12 is subject to higher field strengths. The autonomous modulator 12 is configured so as to provide an RF response signal (illustrated by the arrows 24) that depends on the signal strength of the RF signal emitted by the antenna electrode 14 (also referred to herein as the "RF excitation signal") at the location of the modulator 12. The electronic control unit 16 receives the response signal of the autonomous modulator 12 through the antenna electrode 14. Accordingly, the electronic control unit 16 obtains information concerning the signal strength of the RF excitation signal at the location of the modulator 12 and may derive from this information additional information concerning the presence, the size and/or the location of the conductive body 22.

In the embodiment of Figs. 1 and 2, the modulator is activated only if the RF signal strength at the modulator exceeds a certain minimum signal strength level. Below the minimum signal strength level, the modulator, whose sole source of energy is the surrounding electric fields, is not supplied with sufficient power to energise its internal electronic circuitry and remains "mute". If the signal strength of the RF excitation signal at the modulator exceeds the minimum signal strength level, the electronic circuit of the modulator starts to impose its characteristic modulation onto the RF signal that supplies the power. Accordingly, if the control unit detects the modulation originating from the modulator (RF response signal), this means that the signal strength of the excitation signal at the location of the modulator exceeds the minimum signal strength level. The modulation could additionally be varied by the modulator as a function of the signal strength of the excitation signal. The control unit would then obtain more precise information on the coupling and hence on the conductive body.

Fig. 3 shows a schematic of an autonomous modulator (RFID device) 12, which has as main components a pair of antenna electrodes 26 and an electronic circuit 28, which is powered by external oscillating fields and which produces a modulation upon being powered. Practically, the electronic circuit 28 contains an LC circuit for improved efficiency. The autonomous modulator might comprise a surface-acoustic wave (SAW) device, or any other electronic circuit based upon technology known for RFID devices, capable of producing the desired modulation.

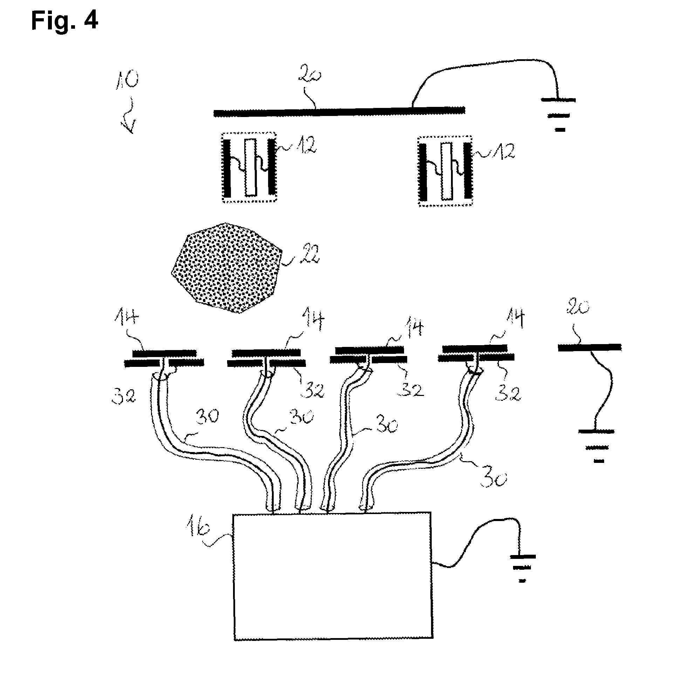

Fig. 4 shows a schematic of a sensing system comprising a plurality of antenna electrodes 14, each of which may be operated as emitter and receiver antenna electrode by the control unit 16. The antenna electrodes 14 are connected to the control unit 16 with shielded cables 30, which ascertain that the origins of the electric fields as well as the location of the receiving spots (here: the electrodes) are well defined. The oscillating voltage the control unit 16 applies to the antenna electrodes 14 creates electric fields between the different antenna electrodes 14 and grounded surfaces (represented as ground electrodes 20). The electronic control unit 16 individually measures the currents flowing into and out of each antenna electrode 14. Each antenna electrode is provided with an active shield electrode 32. The shield electrodes 32 are driven by the control unit through a bypass to the current meter(s) of the control unit at a voltage essentially equal in amplitude and phase to the voltage applied to the corresponding antenna electrode 14. This ensures that the antenna electrodes 14 are shielded on the side where they face away from the space to be monitored and that the measured currents are identical to those flowing into the space to be monitored.

Pairs of antenna electrodes 16 may be driven at the same frequency with mirrored voltages (i.e. 180° phase-shifted), which increases the electric field between these electrodes and reduces the current loss to ground.

While in operation, the electronic control unit 16 applies an RF voltage to one or more antenna electrodes 14. To enable the receiving channels to identify the origin of each signal, a time-multiplexing scheme might be used, according to which only one antenna electrode emits in a given timeslot while the other antenna electrodes do not emit in that timeslot. Alternatively, each antenna electrode 14 can be fed with a characteristic modulation that enables the receiving channels to identify the origin of each signal. One or more antenna electrodes 14 can be switched to individual receivers inside the electronic control unit 16. These receivers measure the magnitude of each RF current induced in a receiving antenna electrode and identify the origin of the RF signal that caused the current thanks to the characteristic modulation. Each detected current can thus be attributed to a particular emitting antenna electrode 14 or autonomous modulator 12. By detecting the coupling between the different antenna electrodes 14 and the field strengths at the autonomous modulators 12, the control unit 16 may estimate the location and size of a conductive body in the space being monitored.

The electronic control unit 16 may be equipped with a microcontroller that varies the frequency of the excitation signals, e.g. in a continuous way (frequency sweep) or in steps (frequency hopping) according to an algorithm, in order to search for clean signals and to avoid frequencies on which there are interference signals generated by the environment. For noisy environments, e.g. if clean reception and distinction of the signals cannot be achieved with different RF carrier frequencies, one may configure the sensing system such that the control unit and the autonomous modulator(s) encode the different RF carrier signals with unique pseudo-random binary sequences (PRBS), with sub-carriers or with PBRS-modulated sub-carriers.

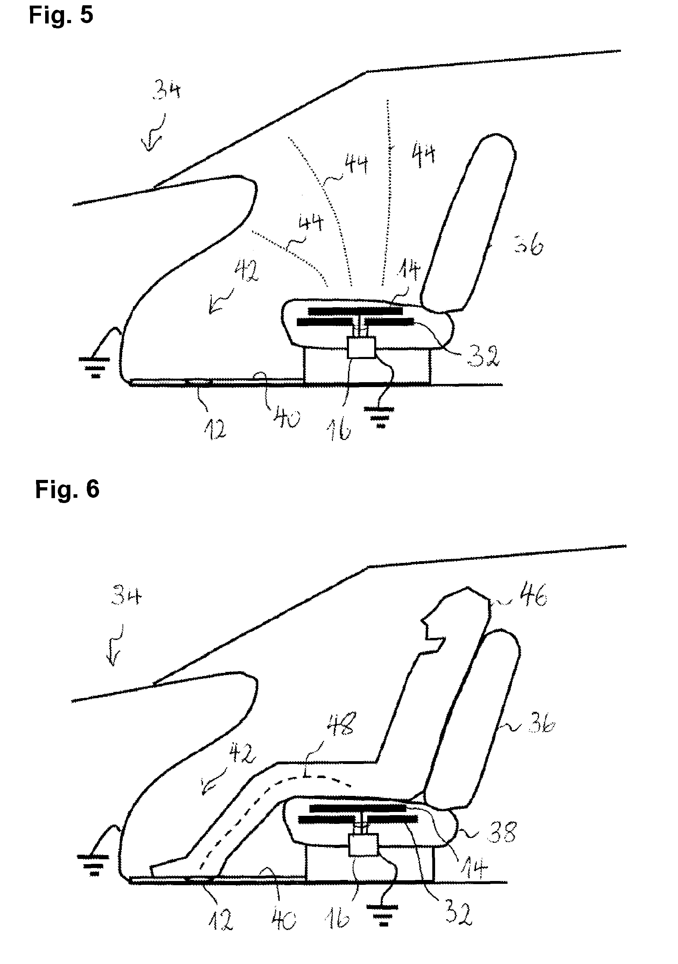

Figs.5 and 6 illustrate how a sensing system as described hereinabove can be used in an automotive vehicle 34, e.g. for occupancy detection. The sensing system of Figs. 5 and 6 comprises a control unit 16 and an antenna electrode that are arranged in the passenger seat 36 (more specifically the seating portion 38 thereof) of the vehicle 34, as well as an autonomous modulator 12 arranged in the carpet 40 of the footwell 42 in front of the passenger seat 36.

When the seat 36 is unoccupied and the sensing system is operating, the antenna electrode emits an RF field (RF excitation signal, illustrated by the dotted lines 44 in Fig. 5), which couples to the vehicle frame (ground). The antenna electrode 14 is provided with an active shield electrode, which ensures that the measured currents are identical to those flowing into the space above the seat surface and that the sensitivity of the system is directed to the space above the seat surface and not rearwards into the seat 26.

When the seat is occupied (Fig. 6), one can observe that the coupling between the antenna electrode 14 and vehicle ground is increased because the (conductive) body of the occupant 46 increases the capacitance of the capacitor formed by the antenna electrode 14 and the vehicle frame. This leads to an increase of the current flowing into the antenna electrode 14, with respect to the situation when the seat 36 is unoccupied. If the occupant 46 is an adult, his or her feet are normally resting on the floor - in contrast to the case where the occupant is a small child. The legs (conductive body) of the occupant thus bridge the gap between the antenna electrode 14 and the autonomous modulator 12 in the footwell 42. Accordingly, the coupling between the autonomous modulator 12 and the antenna electrode 14 is substantially increased with respect to situation where the seat 36 is empty or occupied by a small child. The modulator 12 now receives sufficient power for emitting an RF response signal, which travels to the antenna electrode 12 via the conductive path (illustrated as dashed line 48) provided by the occupant's legs. The control unit 16 detects the RF response signal and thus obtains additional information concerning the occupancy state of the seat 36.

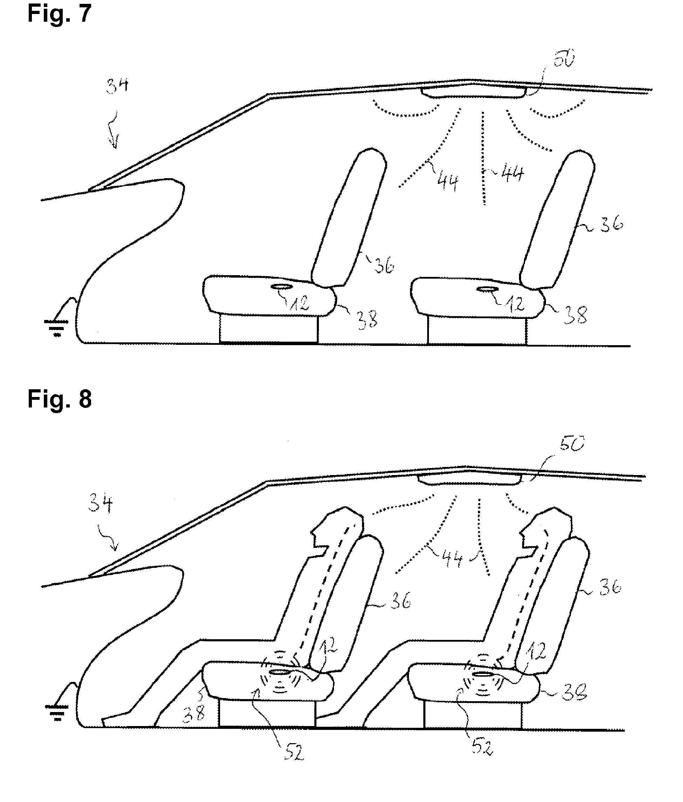

Figs.7 and 8 illustrate another variant of a sensing system integrated into a vehicle 34. The sensing system of Figs. 7 and 8 comprises a central module 50 arranged on the ceiling of the passenger compartment of the vehicle. The central module 50 includes one or more antenna electrodes (not shown) for emitting and receiving RF signals. The control unit of the sensing system may be integrated into the central module 50 or, alternatively, be arranged at a different location in the vehicle and operatively connected to the central module 50. The vehicle 34 includes a plurality of vehicle seats 36, some of which may be configured as removable car seats. Each seat 36 is equipped with an autonomous modulator 12 arranged the seating portion 38 of the seat.

When operating, the central module emits an RF field (RF excitation signal, illustrated by the dotted lines 44 in Figs. 7 and 8), which couples to the vehicle frame (ground). When a seat is occupied (Fig. 8), the seat occupant's body bridges the gap between the central module 50 and the autonomous modulator in the seat on a certain length of the gap. Accordingly, the coupling between the autonomous modulator 12 in the seat and the central module 14 is substantially increased with respect to situation where the seat is empty. The modulator 12 in the seat now receives sufficient power being excited and emits an RF response signal (illustrated at reference numeral 52), which travels to the antenna electrode 12 via the conductive path (illustrated as dashed line 48) provided by the occupant's torso. The central module 50 detects the RF response signal and thus obtains information concerning the occupancy state of the seat.

Each one of the modulators 12 emits a characteristic RF response signal when excited. This ascertains that the control unit may identify the origin of the response signal and determine which ones of the seats 36 are occupied and which ones are vacant.

It shall be noted that although the invention has been described with specific reference to occupant detection systems for vehicles, the invention is not limited to the automotive field.

## Claims

1. A sensing system for monitoring a predetermined space, comprising:
a control unit having one or more antenna electrodes connected thereto, at least one of said one or more antenna electrodes being operable as an emitter antenna electrode for emitting RF excitation signals into said space to be monitored and at least one of said one or more antenna electrodes being operable as a receiver antenna electrode for receiving RF response signals;
a first autonomous modulator arranged at a certain distance from said antenna electrode operable as emitter antenna electrode in such a way that at least a part of said space to be monitored lies between said first autonomous modulator and said antenna electrode operable as emitter antenna electrode;
wherein said first autonomous modulator is configured and arranged for emitting an RF response signal if said first autonomous modulator is excited by an RF excitation signal emitted by said antenna electrode operable as emitter antenna electrode;
and wherein said control unit and said first autonomous modulator are adapted to one another in such a way that said RF response signal emitted by said first autonomous modulator is responsive to the presence of a conductive body in said part of the space to be monitored between said first autonomous modulator and said antenna electrode operable as emitter antenna electrode.

2. The sensing system as claimed in claim 1, wherein said first autonomous modulator is configured such that it is only excited with said RF excitation signal if the signal strength of said RF excitation signal at said first autonomous modulator exceeds a minimum signal strength level, and
wherein said first autonomous modulator and said control unit are adapted to one another in such a way that said signal strength of said RF excitation signal at said first autonomous modulator only exceeds said minimum signal strength level if said conductive body is present in said part of the space to be monitored between said first autonomous modulator and said antenna electrode operable as emitter antenna electrode.

3. The sensing system as claimed in claim 1 or 2, wherein said first autonomous modulator is configured such that a characteristic of said RF response signal emitted by said first autonomous modulator and received by said antenna electrode operable as receiver antenna electrode is indicative of the signal strength of said RF excitation signal at said first autonomous modulator.

4. The sensing system as claimed in any one of claims 1 to 3, including a second autonomous modulator arranged at a certain distance from said one or more antenna electrodes in such a way that at least a part of said space to be monitored lies between said second autonomous modulator and said antenna electrode operable as emitter antenna electrode;
wherein said second autonomous modulator is configured and arranged for emitting an RF response signal if said second autonomous modulator is excited by an RF excitation signal emitted by said antenna electrode operable as emitter antenna electrode;
wherein said control unit and said second autonomous modulator are adapted to one another in such a way that said RF response signal emitted by said second autonomous modulator is responsive to the presence of a conductive body in said part of the space to be monitored between said second autonomous modulator and said antenna electrode operable as emitter antenna electrode;
and wherein the RF response signal emitted by said second autonomous modulator is distinct from the RF response signal emitted by said first autonomous modulator.

5. The sensing system as claimed in claim 4, wherein said second autonomous modulator is configured such that it is only excited with said RF excitation signal if the signal strength of said RF excitation signal at said second autonomous modulator exceeds a minimum signal strength level, and wherein said second autonomous modulator and said control unit are adapted to one another in such a way that said signal strength of said RF excitation signal at said second autonomous modulator only exceeds said minimum signal strength level if said conductive body is present in said part of the space to be monitored between said second autonomous modulator and said antenna electrode operable as emitter antenna electrode.

6. The sensing system as claimed in claim 4 or 5, wherein said second autonomous modulator is configured such that a characteristic of said RF response signal emitted by said second autonomous modulator and received by said antenna electrode operable as receiver antenna electrode is indicative of the signal strength of said RF excitation signal at said second autonomous modulator.

7. The sensing system as claimed in any one of claims 1 to 6, wherein said control unit has a unique antenna electrode connected thereto, said unique antenna electrode being operable as emitter and receiver antenna.

8. The sensing system as claimed in claim 1 to 6, wherein said control unit has at least two antenna electrodes connected thereto.

9. The sensing system as claimed in claim 8, wherein at least two of said antenna electrodes are operable as emitter antenna electrodes for emitting RF excitation signals into said space to be monitored; and wherein RF excitation signals emitted by one of said antenna electrode operable as emitter antenna electrode are characteristic of the antenna electrode that emitted them and distinct from RF excitation signals emitted by another one of said antenna electrodes.

10. An automotive vehicle, including a sensing system as claimed any one of claims 1 to 9, wherein said sensing system is arranged in the passenger compartment of said vehicle for determining an occupancy state of one or more vehicle seats in said vehicle compartment.

11. The automotive vehicle as claimed in claim 10, wherein said antenna electrode operable as emitter antenna electrode is integrated in a vehicle seat and wherein said autonomous modulator is arranged in the footwell associated with said vehicle seat and wherein said space to be monitored includes a space that an occupant of said vehicle seat occupies with his/her legs if he/she is normally seated on said vehicle seat, in such a way that said occupant in this case acts as said conductive body.

12. The automotive vehicle as claimed in claim 10, comprising a plurality of vehicle seats arranged in said vehicle, each one of said vehicle seats being equipped with an autonomous modulator, which is configured and arranged for emitting an RF response signal if it is excited by an RF excitation signal emitted by said antenna electrode operable as emitter antenna electrode.

13. The automotive vehicle as claimed in claim 12, wherein said wherein said control unit has a unique antenna electrode connected thereto, said unique antenna electrode being operable as emitter and receiver antenna, said unique antenna electrode being arranged at a central location of a ceiling of said passenger compartment.

14. The automotive vehicle as claimed in claim 12, wherein said control unit has a plurality of antenna electrodes connected thereto, at least some of said plurality of antenna electrodes being operable as emitter antenna electrodes, said antenna electrodes operable as emitter antenna electrodes being arranged at different locations of said vehicle compartment.
